Europäisches Patentamt

(19) **European Patent Office**

**Office européen des brevets**

(11) Publication number: **0 321 060 B1**

# EUROPEAN PATENT SPECIFICATION

(45) Date of publication of patent specification: **08.04.92**  (51) Int. Cl.⁵: **A23F 5/44**, A23L 1/10, A23L 1/172

(21) Application number: **88202897.0**

(22) Date of filing: **16.12.88**

(54) A process for roasting maize.

(30) Priority: **17.12.87 NL 8703056**

(43) Date of publication of application:
**21.06.89 Bulletin 89/25**

(45) Publication of the grant of the patent:
**08.04.92 Bulletin 92/15**

(84) Designated Contracting States:
**BE DE FR NL**

(56) References cited:
EP-A- 0 290 636       DE-C- 19 634
DE-C- 166 824        DE-C- 308 274
DE-C- 448 336        DE-C- 599 033
ES-A- 245 734

CHEMICAL ABSTRACTS, vol. 55, no. 19, 1961,
abstract no. 19066b, Columbus, Ohio, US; &
ES-A-245 734 (G.O. AGRAMUNT et al.)
09-12-1958

(73) Proprietor: **Douwe Egberts Koninklijke
Tabaksfabriek- Koffiebranderijen-Theehandel
N.V.
Keulsekade 143
NL-3532 AA Utrecht(NL)**

(72) Inventor: **van der Stegen, Gerrit Hubert Dirk
Lodewijkstraat 53
NL-3417 VD Montfoort(NL)**
Inventor: **Dijs, Daniel Albertus Jozef
Goethelaan 61
NL-3533 VP Utrecht(NL)**

(74) Representative: **Smulders, Theodorus A.H.J.,
Ir. et al
Vereenigde Octrooibureaux Nieuwe Parklaan
97
NL-2587 BP 's-Gravenhage(NL)**

Rank Xerox (UK) Business Services

## Description

In the literature, various substitute products for coffee have been proposed. The best known substitute for coffee is probably chicory.

In view of its availability, maize could be a good starting product for making a coffee substitute, were it not that the roasting of maize meets with practical problems. Maize kernels are known to burst open on exposure to heat before they are properly roasted, to form "popcorn". The porous and insulating structure formed owing to the popping prevents further transport of heat into the maize kernel, so that further roasting becomes impossible. When further heat is supplied, the outside becomes burnt only, while within the kernel the maize remains crude and unroasted. An extract of maize thus roasted has a bitter and burnt taste.

In Chemical Abstracts, Vol. 55, No. 19, 1961, No. 19066b, a process is described, comprising steeping ground maize for 48 hours in water to cause fermentation, followed by roasting the fermented maize on direct fire. This results in a highly hygroscopic product.

Up until now, a good method of roasting maize kernels or ground maize so as to produce a water-extractable product which can be used for making a coffee substitute has not been found.

It is an object of the present invention to provide a process for roasting maize, in which the problems outlined above are not encountered.

It has surprisingly been found that soaking maize with water to a moisture content of at least 25% by weight makes the maize properly roastable.

The invention is accordingly characterized by bringing maize to a water content of 25-45%, preferably 30-40% by weight, and roasting the maize at a temperature ranging from 200 to 400°C.

It is extremely surprising that the use of the present process provides an excellently roasted maize, which is properly extractable. In fact, one would expect that, owing to the presence of considerably more water than is normally the case (the original water content of maize is 12% by weight) would result in an even higher degree of popcorn formation during roasting. It has been found, however, that this is not the case, and that an excellently roasted product is obtained.

According to the invention, the water content of the maize is brought, prior to roasting, at 25-45% by weight, preferably at least 33% by weight. Within this range, an optimum product is obtained. The adjustment of the water content is preferably effected by soaking in water or by a treatment with steam. It has been found that boiling in water has a less favourable result, although it is possible under certain conditions.

The period of soaking depends upon the desired water content. Suitable soaking periods with cold water, i.e., water of 5-25°C, range from 2 to 20 hours. Preferably, no, or no substantial fermentation of the maize occurs during soaking.

Roasting the whole maize kernel and roasting ground maize are both possible. In the roasting of ground maize, there is the possibility of effecting a separation between germ and starch portions of the maize kernels. Of these two components, the starch portion provides a brew which is fairly neutral. The germ has a pleasant smell as a dry roasted product, and produces a brew with a somewhat burnt note.

The invention also relates to a hot or cold beverage obtained by the extraction of maize roasted using the process according to the invention. In fact, it has been found that the extract of thus roasted maize, possibly together with milk, sugar or alcohol, provides a nice drink.

It is further noted that, basically, any type of maize can be used.

The invention is illustrated in and by the following examples.

## Example I

Maize kernels with a water content of 12% were soaked in water for 10 hours and, with a moisture content of 34% by weight, introduced into a gas-fired test roaster. Over a period of 13 minutes the temperature was raised to 240°C, and was then kept at that value for another 7 minutes.

The roasted maize was subsequently ground, and a brew was made from it. The extraction efficiency was 50%, and the taste of the brew was fairly neutral, slightly malty-grainy.

### Comparative Example 1

Maize kernels with a moisture content of 12%, i.e., the original moisture content, were roasted in the same manner as described in Example I. The material was greatly expanded (popped). After grinding and making a brew, the extraction efficiency was found to be 45%, while the taste of the brew was characterized as inferior, unpleasantly bitter and burnt.

## Example II

Maize kernels with a moisture content of 12% were ground, and the fines were removed over a sieve of 0.6 mm. The ground maize was soaked in water for $2\frac{1}{2}$ hours to a moisture content of 34% by weight. Using the same conditions as described in Example I, the granules were roasted. From the roasted maize granules, a brew was made. No difference in taste and extraction efficiency was observed, compared with the results of Example I.

The advantage of roasting maize in the ground form is that a more uniform product is obtained.

## Claims

1. A process for roasting maize, characterized by bringing maize to a water content of 25-45% by weight, and roasting the maize at a temperature in the range of from 200 to 400°C.

2. A process as claimed in claim 1, characterized by adjusting the water content to at least 33% by weight.

3. A process as claimed in claim 1 or 2, characterized by roasting ground maize.

4. A process as claimed in claim 1 or 2, characterized by roasting whole maize kernels.

5. A process as claimed in claim 3, characterized by roasting mainly the germ of the maize kernel.

6. Hot or cold beverage obtainable by the extraction of roasted maize produced using the process as claimed in any of claims 1-5.

## Revendications

1. Procédé de torréfaction de maïs, caractérisé en ce que l'on porte le maïs à une teneur en eau de 25 à 45 % en poids et on le torréfie entre 200 et 400°C.

2. Procédé selon la revendication 1, caractérisé en ce que la teneur en eau du maïs est portée à 33 % au moins.

3. Procédé selon la revendication 1 ou 2, caractérisé en ce que l'on torréfie du maïs moulu.

4. Procédé selon la revendication 1 ou 2, caractérisé en ce que l'on torréfie du maïs en grains.

5. Procédé selon la revendication 3, caractérisé en ce que l'on torréfie principalement les germes de grains de maïs.

6. Boisson chaude ou froide pouvant être obtenue par extraction de maïs torréfié obtenu par un procédé selon l'une quelconque des revendications 1 à 5.

## Patentansprüche

1. Verfahren zur Röstung von Mais, dadurch gekennzeichnet, daß man Mais auf einen Wassergehalt von 25-45 Gew.% bringt und den Mais bei einer Temperatur im Bereich von 200 bis 400°C röstet.

2. Verfahren nach Anspruch 1, dadurch gekennzeichnet, daß man den Wassergehalt auf mindestens 33 Gew.% einstellt.

3. Verfahren nach Anspruch 1 oder 2, dadurch gekennzeichnet, daß man gemahlenen Mais röstet.

4. Verfahren nach Anspruch 1 oder 2, dadurch gekennzeichnet, daß man ganze Maiskörner röstet.

5. Verfahren nach Anspruch 3, dadurch gekennzeichnet, daß man hauptsächlich den Keim des Maiskorns röstet.

6. Heißes oder kaltes Getränk, erhältlich durch Extraktion von geröstetem Mais, hergestellt unter Verwendung des Verfahrens nach einem der Ansprüche 1-5.